# EUROPEAN PATENT APPLICATION

(11) **EP 1 489 112 A2**
(43) Date of publication of application: **22.12.2004**
(21) Application number: 04253296.0
(22) Date of filing: 03.06.2004
(51) Int. Cl.: C08F 210/02, C08F 255/02

(54) **Polymerisation process**

(30) Priority: 18.06.2003 GB 0314173
(71) Applicant: SOLVAY POLYOLEFINS EUROPE - BELGIUM (Société Anonyme), 1050 Bruxelles (BE)
(72) Inventor: Frederich, Andre Solvay Polyolefins - Belgium S.A., 1120 Bruxelles (BE)
(74) Representative: Smith, Julian Philip Howard

(57) **Abstract**

A process is disclosed for preparing a composition comprising a polymer (A) of ethylene and a copolymer (B) of ethylene and 1-pentene, wherein ethylene, a catalyst derived from a transition metal selected from groups IIIB, IVB, VB and VIB, hexane diluent and optionally a co-catalyst are introduced into a first reactor where polymerisation of the ethylene is carried out, and then the mixture comprising polymer, catalyst and cocatalyst is removed from the first reactor and introduced into a further reactor together with additional ethylene where polymerisation is carried out in a hexane diluent to form further polymer, characterised in that 1-pentene is introduced into one of the reactors so as to form copolymer (B) in that reactor, and ethylene polymer (A) is formed in the other reactor, the weight ratio of the two polymers being from 30:70 to 70:30, ethylene polymer (A) having an intrinsic viscosity η_{A} (measured in tetrahydronaphthalene at 160°C) of 0.4 to 1.5 dl/g, and the ethylene/1-pentene copolymer (B) having an having an intrinsic viscosity η_{B} of 2.2 to 6.5 dl/g.

## Description

The present invention relates to a method of making a polymer composition comprising a polymer of ethylene and a copolymer of ethylene and an α-olefin, the polymerisation process using at least two reactors connected in series. More particularly, the invention relates to the case where the copolymer is of ethylene and 1-pentene.

EP 603935A discloses a process for the preparation of an ethylene polymer composition comprising a first ethylene polymer having a melt flow index MI₂ of 5-1000 g/10min and a second ethylene polymer having an MI₂ of 0.01-2 g/10min, the weight ratio of the two polymers being 30-70:70-30. An α-olefin may optionally be added to one of the reactors so as to form a copolymer with the ethylene. A substantial list of possible α-olefins is given, including 1-pentene, although 1-butene and 1-hexene are preferred. The diluent used in the polymerisations is preferably hexane.

EP 897934A discloses a similar process, except that in the second reactor ethylene is polymerised with 1-hexene. The process is a suspension polymerisation, with the preferred diluent being isobutane. It is not practical to use hexane as the diluent as it is extremely difficult to separate 1-hexene from hexane, whereas the boiling points of isobutane and hexene are far apart, enabling their separation by distillation.

DE 19929812 discloses a bimodal polyethylene resin suitable for use in pipes, comprising 35-65 wt% of an ethylene homopolymer having an MI₂ of 40-2000 g/10min and a density of at least 965 kg/m³, and 35-65 wt% of an ethylene copolymer having an MI₅ of 0.02-0.2 g/10min and a density of 922-944 kg/m³. Possible comonomers are 1-butene, 1-hexene, 4-methylpentene-1 and 1-pentene. Only 1-hexene is exemplified. The dispersant in the polymerisation reaction is in diesel oil.

Whilst 1-pentene is disclosed as one of a list of many possible comonomers in much prior art relating to bimodal polyethylene resins, it is not generally actually used. In almost all cases, the only comonomers used in practice are 1-hexene or 1-butene. One exception is JP 18645, which discloses a bimodal polymer in which the first block comprises 30-70 wt% of a copolymer of ethylene and an α-olefin having at least five carbon atoms, in the second block comprises 70-30 wt% of a copolymer of ethylene and an α-olefin having at least five carbon atoms, the two blocks having a specific ratio of intrinsic viscosities. In one example, 1-pentene is the copolymer in both blocks. The diluent used during the polymerisation reactions was isobutane.

In certain reactor configurations, pressure requirements mean that isobutane cannot be used as a diluent and therefore hexane is generally used. As explained above, if hexane is used as the diluent it is not practical to use 1-hexene as comonomer due to the difficulties of separation. However in pipe applications, it has been reported that for a given comonomer content, use of 1-hexene may give better pipe properties than 1-butene, and thus the use of 1-butene as comonomer when hexane is used as diluent may not give the best results.

We have now surprisingly discovered that the use of 1-pentene as comonomer (thereby enabling the use of hexane as a diluent) results in certain pipe properties which are superior to those of 1-butene, and in fact similar to or in some cases even better than those of 1-hexene. Such resins containing 1-pentene also have other applications, such as formation into caps.

Accordingly the present invention provides a process for preparing a composition comprising a polymer (A) of ethylene and a copolymer (B) of ethylene and 1-pentene, wherein ethylene, a catalyst derived from a transition metal selected from groups IIIB, IVB, VB and VIB, hexane diluent and optionally a co-catalyst are introduced into a first reactor where polymerisation of the ethylene is carried out, and then the mixture comprising polymer, catalyst and cocatalyst is removed from the first reactor and introduced into a further reactor together with additional ethylene where polymerisation is carried out in a hexane diluent to form further polymer, characterised in that 1-pentene is introduced into one of the reactors so as to form copolymer (B) in that reactor, and ethylene polymer (A) is formed in the other reactor, the weight ratio of the two polymers being from 30:70 to 70:30, ethylene polymer (A) having an intrinsic viscosity η_{A} (measured in tetrahydronaphthalene at 160°C) of 0.4 to 1.5 dl/g, and the ethylene/1-pentene copolymer (B) having an intrinsic viscosity η_{B} of 2.2 to 6.5 dl/g. It is preferred that the 1-pentene is introduced into the further reactor, such that copolymer (B) is made after polymer (A).

Ethylene polymer (A) may be a copolymer of ethylene and at least one α-olefin. The α-olefin can be selected from olefinically unsaturated monomers comprising from 3 to 8 carbon atoms, such as for example, propylene, 1-butene, 1-hexene, 3-methyl-1-butene, 1-pentene, 3- and 4-methyl-1-pentenes and 1-octene. However it is preferred that the polymer (A) is an ethylene homopolymer. For the purposes of the present invention, "ethylene homopolymer" is understood to mean an ethylene polymer composed essentially of monomer units derived from ethylene, and substantially devoid of monomer units derived from other olefins.

"Copolymer of ethylene and 1-pentene" is understood to mean a copolymer comprising monomer units derived from ethylene and monomer units derived from 1-pentene and, optionally, from at least one other α-olefin. The other α-olefin can be selected from olefinically unsaturated monomers comprising from 3 to 8 carbon atoms (with the exclusion of 1-pentene), such as for example, propylene, 1-butene, 1-hexene, 3-methyl-1-butene, 3- and 4-methyl-1-pentenes and 1-octene. Preferred α-olefins are propylene, 1-butene, 1-hexene and 1-octene. The copolymer generally comprises at least 90%, preferably at least 94% and most preferably at least 96%, by weight of monomer units derived from ethylene. The content of monomer units derived from 1-pentene, hereinafter referred to as 1-pentene content, is generally at least 0.4% by weight, preferably at least 0.6% by weight and most preferably at least 1% by weight. The maximum 1-pentene content is typically 10% by weight, preferably no more than 6% by weight. A 1-pentene content not exceeding 4% by weight is particularly preferred. For the purposes of the present invention, the 1-pentene content of the copolymer is measured by ¹³C NMR according to the method described in J.C.RANDALL, JMS-REV.MACROMOL.CHEM. PHYS., C29(2&3), p.201-317 (1989). A copolymer consisting essentially of monomer units derived from ethylene and 1-pentene is particularly preferred.

By "suspension polymerisation" is meant polymerisation in a diluent which is in the liquid state under the polymerisation conditions (temperature, pressure) used, these polymerisation conditions or the diluent being such that at least 50% by weight (preferably at least 70%) of the polymer formed is insoluble in the said diluent. The diluent used in the polymerisation process is, as discussed above, hexane.

In a preferred embodiment of the invention, polymer (A) is an ethylene homopolymer, and 1-pentene is introduced into the further reactor such that copolymer (B) is made after polymer (A). The following discussion relating to the process concerns this particular embodiment of the invention, although the skilled person will appreciate how it can be applied to other embodiments. Subsequent discussion of the compositions made by the process of the invention applies to all embodiments of the invention.

The amount of ethylene introduced into the first polymerisation reactor and into the subsequent polymerisation reactor is generally adjusted so as to obtain a concentration of ethylene in the diluent of 5 to 50 g of ethylene per kg of diluent. The amount of hydrogen introduced into the first reactor is generally adjusted so as to obtain, in the diluent, a molar ratio of hydrogen to ethylene of 0.05 to 1. In the first reactor, this molar ratio is preferably at least 0.1. A hydrogen/ethylene molar ratio which does not exceed 0.6 is particularly preferred. The mixture withdrawn from the first reactor, additionally comprising the polymer (A), is subjected to a reduction in pressure so as to remove (degas) at least a portion of the hydrogen. The reduction in pressure is advantageously carried out at a temperature of less than or equal to the polymerisation temperature in the first reactor. The temperature at which the reduction in pressure is carried out is usually greater than 20°C, and is preferably at least 40°C. The pressure at which the reduction in pressure is carried out is less than the pressure in the first reactor. The pressure is preferably less than 1.5 MPa, but usually at least 0.1 MPa. The amount of hydrogen still present in the at least partially degassed mixture is generally less than 1% by weight of the amount of hydrogen initially present in the mixture withdrawn from the first polymerisation reactor, this amount preferably being less than 0.5%. The amount of hydrogen present in the partially degassed mixture introduced into the subsequent polymerisation reactor is consequently low or even zero. The subsequent reactor is preferably also fed with hydrogen. The amount of hydrogen introduced into the subsequent reactor is generally adjusted so as to obtain, in the diluent, a molar ratio of hydrogen to ethylene of 0.001 to 0.1. This molar ratio is preferably at least 0.004 in this subsequent reactor. It preferably does not exceed 0.05. In the process according to the invention, the ratio of the concentration of hydrogen in the diluent in the first reactor to the concentration in the subsequent polymerisation reactor is usually at least 20, preferably at least 30. A ratio of concentrations of at least 40 is particularly preferred. This ratio usually does not exceed 300, preferably not 200.

The amount of 1-pentene introduced into the subsequent polymerisation reactor is such that, in this reactor, the pentene/ethylene molar ratio in the diluent is at least 0.05, preferably at least 0.1. The amount of pentene introduced into the subsequent reactor is such that the pentene/ethylene molar ratio does not exceed 2. In the process according to the invention, the first reactor is not fed with pentene. It is essential that the first reactor is essentially devoid of 1-pentene. Consequently, the diluent introduced into the first reactor, which can be recycled diluent, must be highly depleted in pentene. The diluent introduced into the first reactor preferably contains less than 1000 ppm of pentene. In a particularly preferred way, the diluent introduced into the first polymerisation reactor is essentially devoid of pentene.

In all embodiments of the invention, the catalyst used in the process according to the invention comprises at least one transition metal. Transition metal is understood to denote a metal from Groups 4, 5 or 6 of the Periodic Table of the Elements (CRC Handbook of Chemistry and Physics, 75th edition, 1994-95). The transition metal is preferably titanium and/or zirconium. Titanium is particularly preferred. In the process according to the invention, use is preferably made of a catalyst comprising, in addition to the transition metal, magnesium. Good results have been obtained with catalysts comprising:
- from 10 to 30%, preferably from 15 to 20%, by weight of transition metal,
- from 0.5 to 20%, preferably from 1 to 10%, by weight of magnesium,
- from 20 to 60%, preferably from 30 to 50%, by weight of halogen, such as chlorine,
- from 0.1 to 10%, preferably from 0.5 to 5%, by weight of aluminium;
the balance generally being composed of elements originating from the products used in their manufacture, such as carbon, hydrogen and oxygen. These catalysts are preferably obtained by coprecipitation of at least one transition metal compound and of a magnesium compound by means of a halogenated organoaluminium compound. Such catalysts are known; they have been disclosed particularly in patents US 3,901,863, US 4,929,200 and US 4,617,360 (Solvay). In the process according to the invention, the catalyst is preferably introduced solely into the first polymerisation reactor, that is to say that fresh catalyst is not introduced into the subsequent polymerisation reactor. The amount of catalyst introduced into the first reactor is generally adjusted so as to obtain an amount of at least 0.5 mg of transition metal per litre of diluent. The amount of catalyst usually does not exceed 100 mg of transition metal per litre of diluent.

The cocatalyst employed in the process according to the invention is preferably an organoaluminium compound. Non-halogenated organoaluminium compounds of formula AIR₃ in which R represents an alkyl group having from 1 to 8 carbon atoms are preferred. Triethylaluminium and triisobutylaluminium are particularly preferred. The cocatalyst is introduced into the first polymerisation reactor. It is also possible to introduce fresh cocatalyst into the subsequent reactor. The amount of cocatalyst introduced into the first reactor is generally at least 0. 1 x 10⁻³ mol per litre of diluent. It usually does not exceed 5 x 10⁻³ mol per litre of diluent. If appropriate, the amount of fresh cocatalyst introduced into the subsequent reactor usually does not exceed 5 x 10⁻³ mol per litre of diluent.

The polymerisation temperature is generally from 20 to 100°C, preferably at least 60°C. It preferably does not exceed 95°C. The total pressure at which the process according to the invention is carried out is generally from 0.1 MPa to 10 MPa. In the first polymerisation reactor, the total pressure is preferably at least 2.5 MPa, but preferably does not exceed 5 MPa. In the subsequent polymerisation reactor, the total pressure is preferably at least 1.3 MPa, but preferably does not exceed 4.3 MPa.

The duration of polymerisation in the first reactor and in the subsequent reactor is generally at least 20 minutes, preferably at least 30 minutes, and usually does not exceed 5 hours, preferably no more than 3 hours.

In order to carry out the process according to the invention, it is possible to make use of a plant comprising more than two polymerisation reactors connected in series. It is preferable to restrict the system to two polymerisation reactors connected in series, separated by a device which makes it possible to carry out the reduction in pressure.

In the process according to the preferred embodiment of the invention (homopolymer of ethylene made followed by ethylene/1-pentene copolymer), a suspension comprising a polyethylene composition comprising from 30 to 70% by weight of the polymer (A) and from 30 to 70% by weight of the copolymer (B) is collected at the outlet of the last polymerisation reactor. The composition comprising ethylene polymers can be separated from the suspension by any known means. The suspension is usually subjected to a reduction in pressure (final reduction in pressure) so as to remove the diluent, the ethylene, the 1-pentene and, optionally, the hydrogen from the composition. According to an alternative form of the process according to the invention, the gases exiting from the first reduction in pressure (intermediate reduction in pressure between the two polymerisation reactors) and from the final reduction in pressure are mixed, compressed and conveyed to a distillation unit. This distillation unit is advantageously composed of one or of two distillation columns in series. When one column is employed, ethylene and hydrogen are withdrawn at the column top, hexane is withdrawn at the column bottom and pentene is withdrawn from an intermediate plate. When two columns are employed, ethylene and hydrogen are withdrawn at the top of the first column, and a hexane-pentene mixture is withdrawn at the bottom and transferred to a second column where pentene is withdrawn at the top and hexane at the bottom. In both cases, the hexane devoid of pentene is recycled to the first reactor.

The process according to the invention makes it possible to obtain, with a good yield and with a low content of oligomers, a composition comprising ethylene polymers exhibiting a very good compromise between mechanical properties and processing properties.

For the purposes of the present invention, melt flow indices MI₂ and MI₅ are understood respectively to denote the melt flow indices measured according to ASTM D 1238 (1986), at a temperature of 190°C, under a load of 2.16 kg and 5 kg respectively. Furthermore, high load melt index of HLMI is understood to denote the melt flow index measured according to ASTM D 1238 (1986), at a temperature of 190°C, under a load of 21.6 kg.

The polymer (A) according to the invention preferably exhibits an MI₂ of at least 50, preferably at least 90 g/10min, but preferably no greater than 700 g/10min. The polymer (A) advantageously exhibits an intrinsic viscosity η_{A} (measured in tetrahydronaphthalene at 160°C) of at least 0.50 dl/g, preferably of at least 0.58 dl/g. Its intrinsic viscosity generally does not exceed 0.9 dl/g, preferably it does not exceed 0.8 dl/g.

The melt flow index MI₅ of the copolymer (B) according to the invention is preferably at least 0.015 g/10min. It preferably does not exceed 0.3 g/10min. The copolymer (B) advantageously exhibits an HLMI of at least 0.05 g/10min, but preferably no more than 20 g/10min.

The copolymer (B) generally exhibits an intrinsic viscosity η_{B} (measured in tetrahydronaphthalene at 160°C) of at least 2.2 dl/g. Its intrinsic viscosity η_{B} generally does not exceed 6.3 dl/g, preferably not 5.9 dl/g.

An important preferred characteristic of the composition resulting from the process of the invention is that it is composed of an intimate and homogeneous mixture of the polymer (A) and of the copolymer (B), the copolymer (B) being prepared in the presence of the polymer (A). The composition is composed of particles comprising both polymer (A) and copolymer (B).

The amount of polymer (A) in the composition comprising ethylene polymers according to the invention is preferably at least 40%, more particularly at least 42%, by weight with respect to the total weight of the composition. The amount of polymer (A) preferably does not exceed 60% by weight. Good results have been obtained with an amount of polymer (A) which does not exceed 58% by weight with respect to the total weight of the composition.

The amount of copolymer (B) is preferably at least 40%, more particularly at least 42%, by weight with respect to the total weight of the composition. The amount of copolymer (B) preferably does not exceed 60% by weight. Good results have been obtained with an amount of copolymer (B) not exceeding 58% by weight with respect to the total weight of the composition.

The composition according to the invention generally comprises at least 95%, preferably at least 99%, by weight of the combination of the polymer (A) and of the copolymer (B). A composition composed solely of the polymer (A) and of the copolymer (B) is particularly preferred.

The composition according to the invention generally exhibits a melt flow index MI₅ of at least 0.07 g/10min, preferably of at least 0.1 g/10min. The MI₅ of the composition usually does not exceed 10 g/10min, preferably not 7 g/10 mm. Compositions for which the MI₅ does not exceed 1 g/10min are particularly preferred. The composition according to the invention advantageously exhibits an HLMI of at least 2 g/10min but preferably no more than 100 g/10min.

An important characteristic of the composition according to the invention is that it exhibits a broad or bimodal molecular weight distribution. This characteristic is illustrated by the ratio of the melt flow indices measured under various loads and more specifically by the HLMI/MI₅ ratio. The compositions usually exhibit an HLMI/MI₅ ratio of greater than 10, preferably greater than 15. The HLMI/MI₅ ratio usually does not exceed 60, and preferably does not exceed 40. In the compositions according to the invention, the ratio of the intrinsic viscosity of the copolymer (B) (η_{B}) to that of the polymer (A) (η_{A}) is generally at least 1.3, preferably at least 2. The η_{B}/η_{A} ratio generally does not exceed 12, preferably no more than 10. A ratio which does not exceed 8 is particularly preferred.

In addition, the composition according to the invention usually exhibits a dynamic viscosity µ₂, measured at 190°C at a rate gradient of 100 s⁻¹, of 10,000 to 30,000 dPa.s. In the context of the present invention, the dynamic viscosity µ₂ is determined by extrusion of the polymer at 190°C, through a die with a length of 15 mm and a diameter of 1 mm, at a constant rate corresponding to a rate gradient of 100s⁻¹ and by measuring the force transmitted by the piston during its descent. The dynamic viscosity µ₂ is then calculated from the relationship µ₂ = 233 x Fp, in which Fp represents the mean force exerted by the piston, expressed in daN, during the measuring time of 30 seconds. The cylinder and the piston of the rheometer which are used for this measurement correspond to the criteria of that used for the measurement of the melt flow index according to ASTM Standard D 1238 (1986).

The compositions according to the invention generally exhibit a standard density SD, measured according to ASTM Standard D 792 (on a sample prepared according to ASTM Standard D 1928, Procedure C), of at least 930 kg/m³. The compositions preferably exhibit an SD of greater than 935 kg/m³. Compositions which have given good results are those for which the SD is at least equal to 940 kg/m³. The SD generally does not exceed 965 kg/m³, and is preferably no more than 960 kg/m³. Compositions for which the SD is less than 955 kg/m³ are particularly preferred. The SD of the polymer (A) present in the compositions according to the invention is generally at least 960 kg/m³, preferably at least 965 kg/m³. A homopolymer (A) having an SD of at least 970 kg/m³ is very particularly preferred. The SD of the copolymer (B) is generally from 910 to 940 kg/m³. The SD of the copolymer (B) is preferably at least 915 kg/m³. The SD of the copolymer (B) preferably does not exceed 938 kg/m³, more particularly no more than 935 kg/m³.

The compositions according to the invention are suitable for being employed in conventional processes for shaping articles and more particularly in injection moulding, extrusion and extrusion blow-moulding processes. The compositions according to the invention are well suited to the manufacture of films. The compositions according to the invention make it possible to obtain films exhibiting both a good surface appearance (absence of defects known as shark skin) and a good resistance to tearing and to perforation.

The compositions according to the invention are particularly well suited to the extrusion of pipes, in particular pipes for the transportation of pressurized fluids, such as water and gas. The invention consequently also relates to the use of a composition made by the process of the invention for the manufacture of pipes. The manufacture of pipes by extrusion of a composition according to the invention is advantageously carried out on an extrusion line comprising an extruder, a sizer and a haul-off device. The extrusion is generally carried out on an extruder of the single-screw type and at a temperature of 150 to 230°C. The sizing of the pipes can be carried out by the creation of a negative pressure within the pipe and/or by the creation of an excess pressure outside the pipe.

The pipes manufactured by means of the compositions according to the invention are characterized by: a good resistance to slow crack propagation or environmental stress cracking resistance (ESCR), a good resistance to rapid crack propagation (RCP), and a good creep resistance (τ).

The pipes manufactured by means of the compositions according to the invention are characterized in particular by a better compromise between the resistance to crack propagation (slow crack propagation and rapid crack propagation) and creep resistance in comparison with the known compositions of the prior art.

When used for the molten shaping of articles, the compositions according to the invention can be mixed with the usual processing additives for polyolefins, such as stabilizers (antioxidizing agents and/or anti-UV agents), antistatic agents and processing aids, as well as pigments. The mixtures typically comprise at least 95%, preferably at least 97%, by weight of a composition made according to the invention and at least one of the additives described above.

The examples which follow are intended to illustrate the invention. Examples 1-7 illustrate compositions intended for use as pipe resins. Example 8 is a composition intended for use as a cap, and hence has different physical properties.

### EXAMPLES 1-8

A: Catalyst preparation
Magnesium diethoxide was reacted with titanium tetrabutoxide for 4 hours at 150°C in amounts such that the molar ratio of titanium to magnesium was 2. The reaction product thus obtained was then chlorinated and precipitated by bringing it into contact with an ethylaluminium dichloride solution for 90 minutes at 45°C, with the aluminium: magnesium ratio being 6.5. The solid thus obtained, collected from the suspension, comprised (% by weight): Ti- 17; Cl- 41; AI- 2; Mg- 5, although this may be varied.
B: Bench scale preparation of the Low Molecular Weight (LMW) homopolymer Under a stream of dry nitrogen gas 2 millimole of triethyl aluminium (TEAL) and 1500 ml of isobutane were introduced into a dry autoclave reactor having a volume of 5 litres and provided with an agitator. The temperature was raised to 85°C, and after pressure stabilisation hydrogen gas was added. Ethylene gas was then introduced until a partial pressure of ethylene of 6 x 10⁵ Pa was achieved. The amount of hydrogen previously introduced into the autoclave reactor was selected so as to obtain the desired final gas phase molar ratio of hydrogen to ethylene (H₂/C₂ molar ratio).
The polymerisation was then started by flushing the solid catalyst A prepared above into the autoclave with 200 ml of isobutane. The temperature and total pressure were kept constant over the polymerisation period. The catalyst was killed with ethanol, and the reactor cooled and vented. The low molecular weight polyethylene was then collected from the reactor.
The polymerisation conditions are specified in Table 1.
C: Bench scale preparation of the High Molecular Weight (HMW) copolymer
The process for preparing the high molecular weight fraction was similar to that for preparing the low molecular weight fraction specified above, except that instead of adding hydrogen after raising the temperature, varying amounts of 1-pentene comonomer were added and then ethylene and hydrogen subsequently introduced, in order to obtain the desired ethylene partial pressure and C₅⁼/C₂ ratio. Reaction conditions were as follows:
Diluent: isobutane, 1.5 litre (but 2.01 of hexane in case of Example 8). Isobutane rather than hexane was used in Examples 1-7 for this experiment for safety reasons, to avoid exposing the operators to hexane vapour; however this does not have any effect on the properties of the polymer produced.
Temperature: 75°C
Catalyst A prepared above TEAL, 2 mmoles
Ethylene partial pressure: 5 bar (4 bar in Example 8)
Comonomer: pentene-1
The high molecular weight ethylene-pentene copolymer obtained was collected from the reactor.
D: Preparation of the Polyethylene Resin Blend
In order to prepare the bimodal resin, the desired quantity of the low molecular weight polyethylene fraction obtained in Example B above was blended with the desired quantity of the high molecular weight ethylene-hexene copolymer obtained in Example C together with calcium stearate (1.0g/kg, 2.0g/kg in Example 8) and Irganox B225 antioxidant (3.5g/kg, 1.0g/kg in Example 8) commercially available from CIBA Speciality Chemicals. The resulting blend was pelletised in an extruder (APV Baker under the trade name MP 19TC25).
The density of the polyethylene was measured according to ISO 1183. HLMI was measured using the procedures of ASTM D-1238 at 190°C using a load of 21.6kg. MI₂ was measured using the procedures of ASTM D-1238 at 190°C using a load of 2.16kg. µ₀ is the viscosity at a shear rate of 100 s⁻¹, with a die having a ratio of length to internal diameter of 30:2. Environmental stress crack resistance (ESCR) is determined by the full notch creep test (FNCT) described below.
Properties of the two blocks and also of the compounded blend are shown in Table 1. Note that for the second block, when not directly measurable its intrinsic viscosity is calculated from the intrinsic viscosity of the first block, the intrinsic viscosity of the overall resin and the ratio of the two blocks.

**TABLE 1**

| *Example* | | 1 | 2 | 3 | 4 | 5 | 6 | 7 | 8 |
|---|---|---|---|---|---|---|---|---|---|
| LMW block | p1 | 0.49 | 0.49 | 0.55 | 0.49 | 0.55 | 0.60 | 0.60 | 0.50 |
| | ηᵢ (l/g) | 0.052 | 0.052 | 0.052 | 0.052 | 0.052 | 0.052 | 0.052 | 0.068 |
| | Density (kg/m³) | 972.8 | 972.8 | 972.8 | 972.8 | 972.8 | 972.8 | 972.8 | 972.3 |
| HMW block | p2 | 0.51 | 0.51 | 0.45 | 0.51 | 0.45 | 0.40 | 0.40 | 0.50 |
| | ηᵢ (l/g) | 0.560 | 0.490 | 0.533 | 0.531 | 0.536 | 0.504 | 0.467 | 0.237 |
| | Density (kg/m³) | 921.2 | 925.9 | 922.1 | 929.7 | 925.3 | 920.0 | 915.7 | 932.4 |
| Resin blend | HLMI (g/10 min) | 6.1 | 8.8 | 14.6 | 6.9 | 12.5 | 33.0 | 52.0 | 93.0 |
| | MI₅ (g/10 min) | 0.18 | 0.31 | 0.36 | 0.24 | 0.30 | 0.89 | 1.50 | 6.30 |
| | HLMI/MI₅ ratio | 33.9 | 28.4 | 40.6 | 28.8 | 41.7 | 37.1 | 34.7 | 14.8 |
| | NMR (C3 /1000) | 2.9 | 2.0 | 2.4 | 1.1 | 2.5 | 2.7 | 4.0 | 2.4 |
| | Density (kg/m³) | 949.0 | 951.7 | 952.5 | 954.7 | 951.7 | 953.6 | 951.0 | 952.7 |
| | ηᵢ (l/g) | 0.297 | 0.260 | 0.266 | 0.275 | 0.291 | 0.224 | 0.274 | |
| | µ2 (dPa.s) | 20900 | 20000 | 16200 | 21000 | 16900 | 12600 | 10800 | 10300 |
| | Mn (kDa) | 9315 | 9509 | 8353 | 8548 | 8231 | 7933 | 8487 | 13064 |
| | Mw (kDa) | 28942 | 23572 | 24788 | 26614 | 27988 | 21359 | 19558 | 10009 |
| | | 1 | 5 | 9 | 8 | 7 | 7 | 2 | 8 |
| | N100 FNCT (hr) | >3000 | 2051 | 1918 | 108 | DF | | | 2.60 |
| | N5 FNCT (hr) | >3000 | 237 | 1374 | 28 | 2449 | | | 1.24 |
| ηᵢ = inherent (not intrinsic) viscosity | | | | | | | | | |

### EXAMPLES 9-27 (comparative)

Resin blends were prepared using the same basic procedure as above, but with 1-butene, 1-hexene and 1-octene as comonomer instead and hexane as diluent. The results are shown in Tables 2-4 below; the LMW block was the same as in Table 1, and is not shown.

**TABLE 2 -**

| butene comonomer | | | | | | | | |
|---|---|---|---|---|---|---|---|---|
| *Example* | | 9 | 10 | 11 | 12 | 13 | 14 | 15 |
| HMW block | p2 | 0.51 | 0.45 | 0.40 | 0.51 | 0.51 | 0.51 | 0.40 |
| | ηᵢ (l/g) | 0.467 | 0.588 | 0.663 | 0.503 | 0.423 | 0.536 | 0.640 |
| | Density (kg/m³) | 932.3 | 931.6 | 925.0 | 927.6 | 930.2 | 936.0 | 921.9 |
| Resin blend | HLMI (g/10 min) | 10.3 | 9.0 | 18.3 | 8.8 | 12.8 | 5.7 | 27.0 |
| | MI₅ (g/10 min) | 0.41 | 0.23 | 0.43 | 0.31 | 0.57 | 0.20 | 0.57 |
| | HLMI/MI₅ ratio | 25.1 | 39.1 | 42.6 | 28.4 | 22.5 | 28.5 | 47.4 |
| | NMR (C₂ /1000) | 1.112 | 0.72 | 1.68 | 1.836 | 1.581 | | 2.56 |
| | Density (kg/m³) | 955.5 | 958.5 | 956.7 | 952.8 | 953.7 | 958.4 | 954.4 |
| | ηᵢ (l/g) | 0.260 | 0.293 | 0.294 | 0.275 | 0.247 | 0.284 | 0.279 |
| | µ2 (dPa.s) | | | | | | | |
| | Mn (kDa) | 9607 | 8417 | 7482 | 9475 | 11012 | 9614 | 8168 |
| | Mw (kDa) | 21738 | 25835 | 25395 | 22749 | 20776 | 26188 | 24769 |
| | | 4 | 2 | 1 | 8 | 9 | 5 | 2 |
| | N100 FNCT (hr) | 15.2 | 25.7 | 192.9 | 79.1 | 20.6 | 6.8 | 941.8 |
| | N5 FNCT (hr) | | | | | | | |
| ηᵢ = inherent (not intrinsic) viscosity | | | | | | | | |

**TABLE 3 -**

| hexene comonomer | | | | | | | |
|---|---|---|---|---|---|---|---|
| *Example* | | 16 | 17 | 18 | 19 | 20 | 21 |
| HMW block | p2 | 0.51 | 0.51 | 0.51 | 0.45 | 0.40 | 0.51 |
| | ηᵢ (l/g) | 0.503 | 0.478 | 0.249 | 0.523 | 0.522 | 0.612 |
| | Density (kg/m³) | 933.3 | 927.6 | 919.8 | 936.0 | 929.3 | 926.0 |
| Resin blend | HLMI (g/10 min) | 8.2 | 9.6 | 13.8 | 6.2 | 12.8 | 16.1 |
| | MI₅ (g/10 min) | 0.32 | 0.35 | 0.40 | 0.23 | 0.40 | 0.39 |
| | HLMI/MI₅ ratio | 25.6 | 27.4 | 34.5 | 27.0 | 32.0 | 41.3 |
| | NMR (C₄ /1000) | 0.714 | 1.785 | 3.672 | 0.459 | 1.035 | 1.24 |
| | Density (kg/m³) | 956.5 | 952.3 | 947.4 | 958.6 | 956.7 | 957.1 |
| | ηᵢ (l/g) | 0.296 | 0.274 | 0.272 | 0.284 | 0.267 | 0.275 |
| | µ2 (dPa.s) | | | | | | |
| | Mn (kDa) | 10306 | 9659 | | 10359 | 8741 | 8856 |
| | Mw (kDa) | 281178 | 234944 | | 250475 | 228647 | 253309 |
| | N100 FNCT (hr) | 24.2 | 715.7 | | 11.2 | 101.6 | 427.2 |
| | N5 FNCT (hr) | | | | | | |
| ηᵢ = inherent (not intrinsic) viscosity | | | | | | | |

**TABLE 4 -**

| octene comonomer | | | | | | | |
|---|---|---|---|---|---|---|---|
| *Example* | | 22 | 23 | 24 | 25 | 26 | 27 |
| HMW block | p2 | 0.40 | 0.51 | 0.51 | 0.51 | 0.51 | 0.45 |
| | ηi (l/g) | 0.568 | 0.526 | 0.503 | 0.514 | 0.494 | 0.522 |
| | Density (kg/m³) | 926.9 | 927.9 | 928.2 | 936.9 | 932.5 | 933.8 |
| Resin blend | HLMI(g/10min) | 17.1 | 6.3 | 11.9 | 6.2 | 7.5 | 10.9 |
| | MI₅ (g/10 min) | 0.41 | 0.24 | 0.52 | 0.23 | 0.31 | 0.36 |
| | HLMI/MI₅ ratio | 41.7 | 26.3 | 22.9 | 27.0 | 24.2 | 30.3 |
| | NMR (C₆ /1000) | | 1.173 | 1.224 | 0.408 | | |
| | Density (kg/m³) | 957.8 | 953.2 | 952.6 | 959.3 | 956.0 | 959.5 |
| | ηᵢ (l/g) | 0.265 | 0.277 | 0.240 | 0.287 | 0.271 | 0.263 |
| | µ2 (dPa.s) | | | | | | |
| | Mn (kDa) | 8042 | 10403 | 11734 | 10282 | 10191 | 9117 |
| | Mw (kDa) | 248348 | 239621 | 203954 | 272474 | 230304 | 234282 |
| | N100 FNCT (hr) | 85.7 | 139.9 | 71.7 | 8.3 | 19.6 | 10.3 |
| | N5 FNCT (hr) | | | | | | |
| ηᵢ = inherent (not intrinsic) viscosity | | | | | | | |

The blends were subjected to a Full Notched Creep Test (FNCT) under the following conditions:

Test specimens were cut with parallel slides and square cross-sections. Each specimen was notched perpendicular to the parallel length in the middle of the test specimen.
5.0±0.03 N/mm2 (MPa) constant tensile stress related to the remaining unnotched cross-section.
Bath details: 2.0% Arkopal in demineralized water at 80°C (note that the pentene-1 bimodal samples have been tested in two different Arkopal solutions: N100 and NM5.
This is because some samples exhibited ductile fractures in N100, which does not happen in NM5).

The results of the FNCT tests are shown in Table 1 above. To assess how compositions containing 1-pentene compare with equivalent compositions containing 1-hexene or 1-butene, the FNCT results are plotted against other intrinsic parameters in the resins (except for Example 8, which is not intended for use in pipes, but in caps).

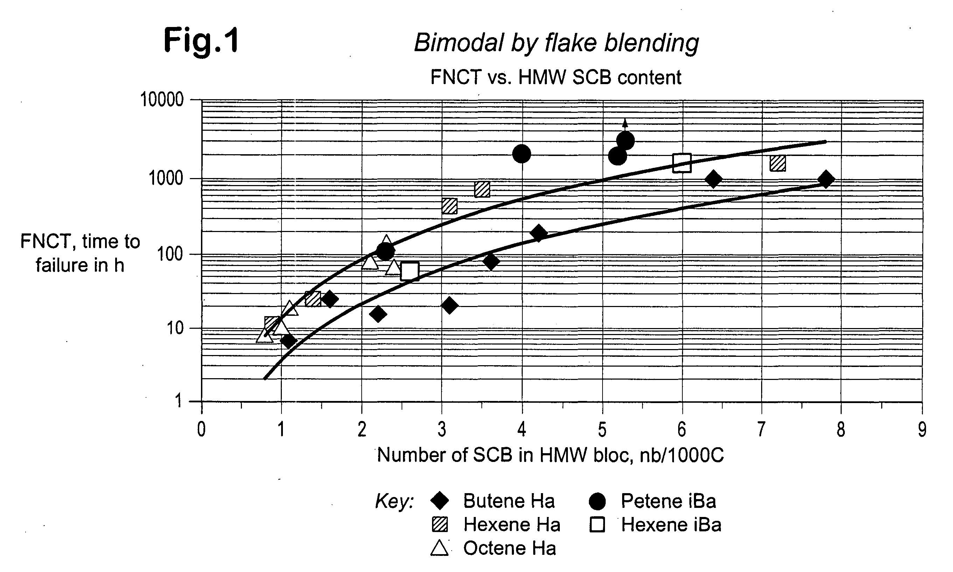

In Figure 1, FNCT is plotted against the degree of short chain branching. This shows that the compositions containing 1-pentene as comonomer behaves much more like those containing 1-hexene or 1-octene than those containing 1-butene. In fact, the results for the 1-pentene compositions are as good or better than those for the 1-hexene compositions.

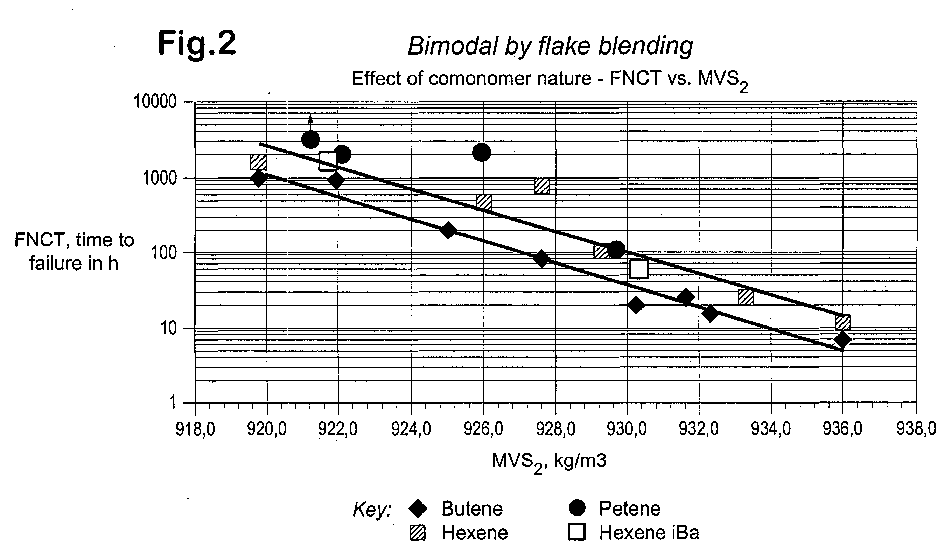

A similar pattern a shown in Figure 2, in which FNCT is plotted against density of the high molecular weight (copolymer) block. Again, the composition containing 1-pentene as comonomer gives better results than any of the compositions containing other comonomers.

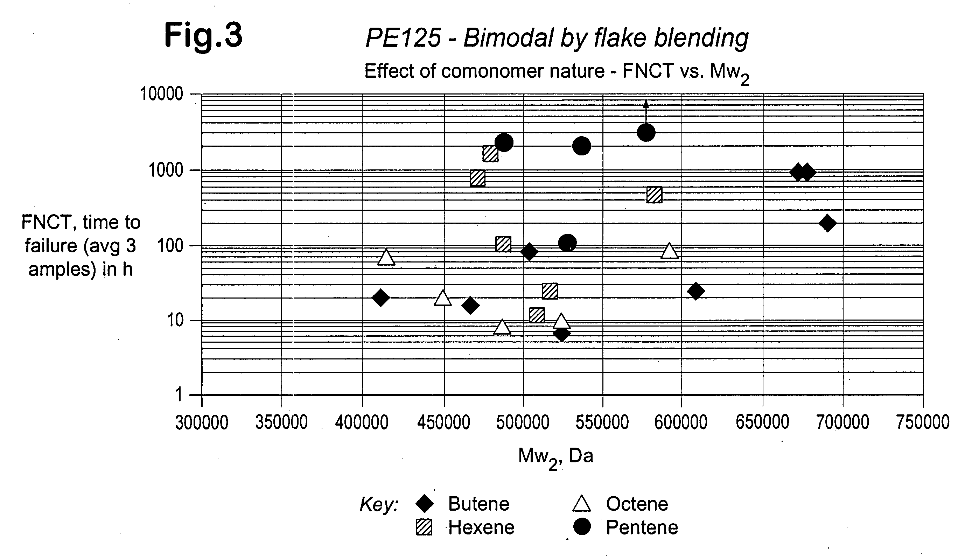

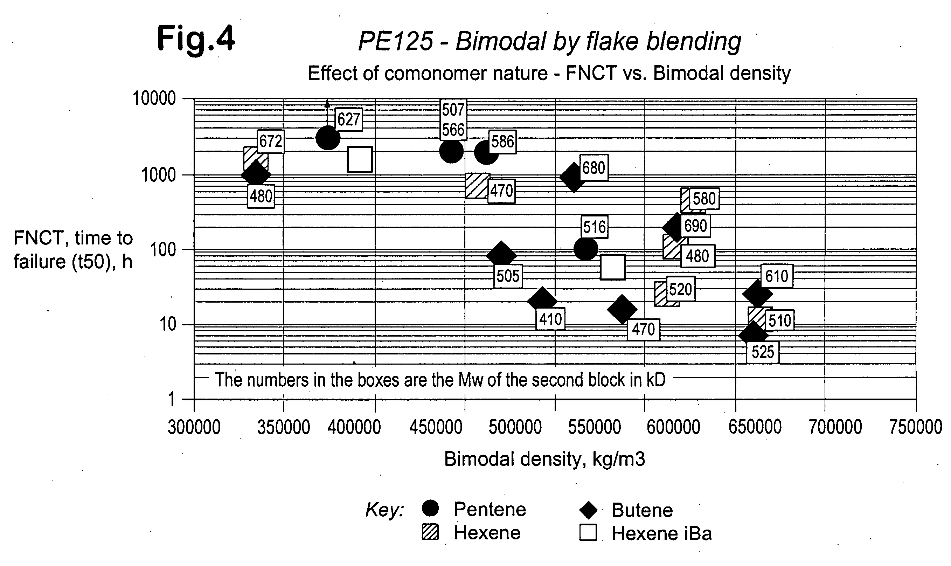

It is well known that the molecular weight of the high molecular weight block has a significant influence on long-term physical properties and in particular on slow crack growth. Figure 3 shows FNCT plotted against the molecular weight of the copolymer block. Once again, 1-pentene containing compositions provide the best results. Finally, Figure 4 shows FNCT plotted against the density of the resin blend. Again the compositions containing 1-pentene show outstanding performance.

## Claims

1. Process for preparing a composition comprising a polymer (A) of ethylene and a copolymer (B) of ethylene and 1-pentene, wherein ethylene, a catalyst derived from a transition metal selected from groups IIIB, IVB, VB and VIB, hexane diluent and optionally a co-catalyst are introduced into a first reactor where polymerisation of the ethylene is carried out, and then the mixture comprising polymer, catalyst and cocatalyst is removed from the first reactor and introduced into a further reactor together with additional ethylene where polymerisation is carried out in a hexane diluent to form further polymer, **characterised in that** 1-pentene is introduced into one of the reactors so as to form copolymer (B) **in that** reactor, and ethylene polymer (A) is formed in the other reactor, the weight ratio of the two polymers being from 30:70 to 70:30, ethylene polymer (A) having an intrinsic viscosity η_{A} (measured in tetrahydronaphthalene at 160°C) of 0.4 to 1.5 dl/g, and the ethylene/1-pentene copolymer (B) having an intrinsic viscosity η_{B} of 2.2 to 6.5 dl/g.

2. Process according to claim 1, wherein 1-pentene is introduced into the further reactor, such that copolymer (B) is made after polymer (A).

3. Process according to claim 1 or 2, wherein polymer (A) has an intrinsic viscosity η_{A} of 0.5 to 0.9 dl/g, preferably 0.5 to 0.8 dl/g.

4. Process according to any preceding claim, wherein copolymer (B) has an intrinsic viscosity η_{B} of 2.2 to 6.3 dl/g.

5. Process according to any preceding claim, wherein the composition has an HLMI/MI₅ ratio of greater than 10, preferably greater than 15.

6. Process according to any preceding claim, wherein the ratio of the intrinsic viscosity of the copolymer (B) (η_{B}) to that of the polymer (A) (η_{A}) is at least 1.3, preferably at least 2.

7. Process according to claim 6, wherein the ratio of the intrinsic viscosity of the copolymer (B) (η_{B}) to that of the polymer (A) (η_{A}) is from 8 to 12.

8. Process according to any preceding claim, wherein the melt flow index MI₅ of the copolymer (B) is at least 0.015 g/10min, and preferably does not exceed 0.3 g/10min.

9. Process according to any preceding claim, wherein the copolymer (B) has an HLMI of at least 0.05 g/10min, and preferably no more than 20 g/10min.

10. Process according to any preceding claim, wherein the standard density of the composition is from 940 kg/m³ to 960 kg/m³.

11. Process according to any preceding claim, wherein polymer (A) is a homopolymer.
